# EUROPÄISCHE PATENTSCHRIFT

(11) **EP 1 159 734 B1**
(45) Veröffentlichungstag und Bekanntmachung des Hinweises auf die Patenterteilung: **19.05.2004**
(21) Anmeldenummer: 00916777.6
(22) Anmeldetag: 01.03.2000
(51) Int. Cl.: G10L 15/06, G10L 13/06

(54) **VERFAHREN UND ANORDNUNG ZUR ERMITTLUNG EINER MERKMALSBESCHREIBUNG EINES SPRACHSIGNALS**
METHOD AND ARRAY FOR DETERMINING A CHARACTERISTIC DESCRIPTION OF A VOICE SIGNAL
PROCEDE ET DISPOSITIF POUR LA DETERMINATION D'UNE DESCRIPTION CARACTERISTIQUE D'UN SIGNAL VOCAL

(30) Priorität: 08.03.1999 DE 19910038
(43) Veröffentlichungstag der Anmeldung: 05.12.2001
(73) Patentinhaber: SIEMENS AKTIENGESELLSCHAFT, 80333 München (DE)
(72) Erfinder: HOLZAPFEL, Martin, D-80933 München (DE)
(86) Internationale Anmeldenummer: PCT/DE2000/000597
(87) Internationale Veröffentlichungsnummer: WO 2000/054256

(56) Entgegenhaltungen:
- WO-A-99/45530
- JIANMING SONG ET AL: "A ROBUST SPEAKER-INDEPENDENT ISOLATED WORD HMM RECOGNIZER FOR OPERATION OVER THE TELEPHONE NETWORK" SPEECH COMMUNICATION,NL,ELSEVIER SCIENCE PUBLISHERS, AMSTERDAM, Bd. 13, Nr. 3/04, 1. Dezember 1993 (1993-12-01), Seiten 287-295, XP000421441 ISSN: 0167-6393
- H. BOURLARD, S.DUPONT, C. RIS: "Multi-Stream Speech Recognition" IDIAP RESEARCH REPORT, [Online] Dezember 1996 (1996-12), Seiten 1-13, XP002141769 Martigny Gefunden im Internet: <URL:ftp://ftp.idiap.ch/pub/reports/1996/r r96-07.ps.gz> [gefunden am 2000-07-04]

## Beschreibung

Die Erfindung betrifft ein Verfahren und eine Anordnung zur Ermittlung einer Merkmalsbeschreibung eines Sprachsignals.

Ein solches Verfahren und eine solche Anordnung sind bekannt aus [1]. Dort verfolgt die Extraktion einer diskreten zeitlichen Folge von Merkmalsvektoren aus dem Sprachsignal mehrere Ziele:
- die digitale Repräsentation des Sprachschalls;
- die Reduktion der Datenmenge;
- die Hervorhebung von Variabilitäten, die zur Identifikation des Äußerungsinhaltes (der gesprochenen Laute und Wörter) hilfreich sind;
- die Ausblendung von Variabilität, welche den Sprecher, die Sprechweise, Umgebungseinflüsse sowie akustische und elektrische Übertragungseigenschaften charakterisieren.

Generell sollen Merkmalsvektoren relevanter Musterklassen des Anwendungsbereichs kompakte Gebiete des Merkmalsraums einnehmen, und die Gebiete unterschiedlicher Musterklassen sollen möglichst scharf voneinander trennbar sein. Bekannte Techniken der Merkmalsgewinnung beruhen vorwiegend auf der Kombination von Verfahren aus der digitalen Signalverarbeitung, insbesondere Reihenentwicklungen, mit Funktionsmodellen für die Sprachproduktion oder -perzeption.

Nach ihrer Aufnahme liegt die Schallwelle in Form eines elektrischen Signals vor, das durch eine reellwertige, kontinuierliche Zielfunktion 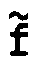 (t) beschrieben wird. Zur Weiterverarbeitung auf einem Rechner müssen Definitions- und Wertebereich des Signals diskretisiert werden. Durch eine Abtastung des Zielfunktion 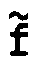 (t) an diskreten Stützstellen geht Information verloren. Gehorcht 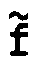 (t) jedoch einer spektralen Bandbegrenzung, so ist die Funktion bei hinreichend groß gewählter Abtastfrequenz aus ihren Abtastwerten rekostruierbar.

Schallwellen sind nichtstationäre Signale, ihre spektralen Eigenschaften variieren von Laut zu Laut. Selbst intraphonetisch bewirkt die Dynamik der Artikulationsgesten kontinuierliche (bei Diphthongen) und abrupte (bei Plosiven und Affrikaten) Veränderungen der Schallstruktur. Nur über sehr kurze, etwa 5-30ms andauernde Zeitabschnitte hinweg kann das Sprachsignal als näherungsweise stationäre angesehen werden.

Kurzzeitmerkmale des Sprachsignals müssen nicht zu jedem Abtastzeitpunkt m berechnet werden. Ein gefensterter Ausschnitt des Sprachsignals in der Größenordnung von 25ms wird mit einer Fortschaltzeit von 10ms durch das Sprachsignal bewegt. Für jeden Zeitpunkt 10ms entsteht dabei ein Merkmalsvektor. Zu jedem 10ms-Zeitpunkt werden die Werte des Datenfensters (25ms) auf ihre spektralen und periodischen Eigenschaften hin analysiert und in Form des Merkmalsvektors abgespeichert.

Ferner sind Hidden-Markov-Modelle (HMM) zur Modellierung von Lauten aus [2] bekannt. Bei der sprachlichen Produktion eines Wortes werden die konstituierenden Laute mit variabler Dauer und in unterschiedlicher spektraler Zusammensetzung realisiert. Abhängig von Sprechtempo und -rhythmus entfällt auf jedes einzelne phonetische Segment der Äußerung eine nicht vorhersagbare Anzahl von Merkmalsvektoren; jeder Vektor umfaßt neben seinem phonetischen Gehalt auch sprecher-, umgebungs- und verschleifungsbedingte Informationsanteile, die eine lautliche Identifikation deutlich erschweren.

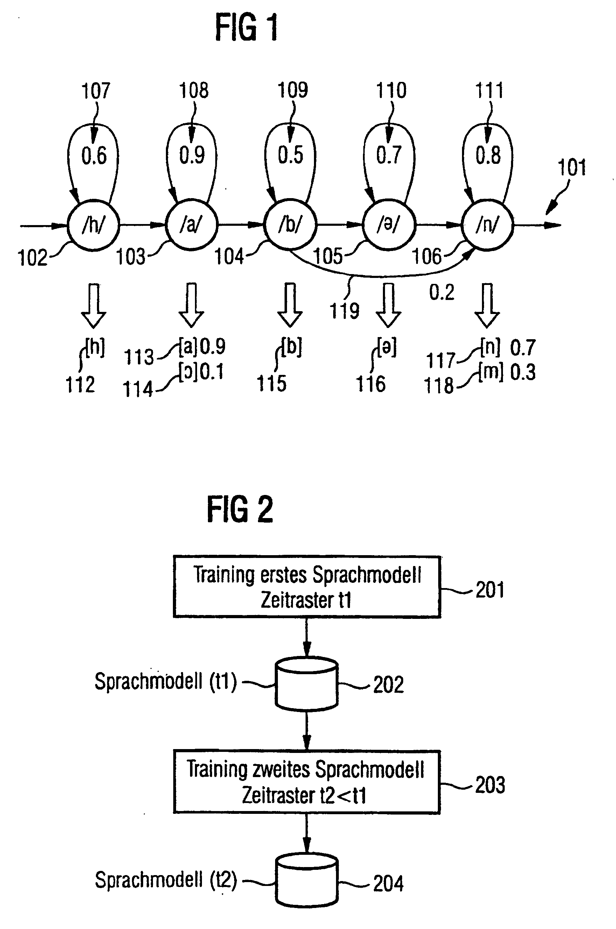

Diese Verhältnisse lassen sich vereinfachend durch eine zweistufigen Prozeß modellieren, wie Fig.1 am Beispiel des Wortes "haben" zeigt. Für die Phoneme des Wortes sind im Modell eine entsprechende Anzahl von Zuständen 102 bis 106 reserviert, die zur Sprachproduktion entlang der Pfeilrichtung 101 durchlaufen werden. Zu jedem Zeittakt ist ein Verbleiben im aktuellen Zustand oder ein Übergang zu dem Nachfolgezustand möglich; das System verhält sich statistisch und wird von den eingezeichneten Übergangswahrscheinlichkeiten 107 bis 111 bestimmt. So wird beispielsweise der zu dem Phonem /a/ gehörende Zustand 103 über mehrere (im Mittel über zehn) aufeinanderfolgende Kurzzeitanalyseintervalle hinweg eingenommen, Realisierungen des Plosivs /b/ hingegen nehmen weniger Zeit in Anspruch.

Während die beschriebene erste Stufe des Zufallsprozesses die zeitliche Verzerrung unterschiedlicher Aussprachevarianten modelliert, dient eine zweite Stufe der Erfassung spektraler Variationen. An jeden Zustand des Wortmodells ist eine statistische Ausgabefunktion gebunden, welche die phonetischen Realsierungsalternativen gewichtet. Im Beispiel von Fig.1 werden zur Produktion des Phonems /a/ neben der eigentlich passenden Phonklasse 113 auch die Phonklasse 114 mit einer positiven Wahrscheinlichkeit (hier: 0,1) zugelassen. Ebenfalls zugelassen wird die Phonlasse 118 zur Produktion des Phonems /n/ mit einer Wahrscheinlichkeit von 0,3. Auch erlaubt der beschriebene Formalismus eine Beschreibung einer optionalen Lautelimination, ausgedrückt durch die "Überbrückung" 119 des Zustands 105 durch einen direkten Übergang zwischen den Zuständen 104 und 106. Die Überbrückung ist beispielhaft mit einer Wahrscheinlichkeit von 0,2 belegt.

Die Übergangswahrscheinlichkeiten des Hidden-Markov-Modells können anhand von Trainingsdaten ermittelt werden. Das fertig trainierte HMM stellt dann eine Vorschrift zur Produktion von Lautfolgen dar (vgl. [2], Seiten 127-139). Eine Methode zum Trainieren des HMMs ist der Einsatz des Baum-Welch-Algorithmus.

Hierbei sei angemerkt, daß ein trainiertes HMM sowohl zur Spracherkennung, also zum Vergleich einer natürlichsprachlichen Äußerung mit dem Modell, als auch zur Sprachsynthese, also zur Produktion eines Lautes anhand der Trainingsdaten, einsetzbar ist.

Nun sind die eingangs erwähnten 10ms-Abschnitte für Merkmalsvektoren insbesondere für die Sprachsynthese nicht ausreichend. Eine deutlich feinere zeitliche Unterteilung führt mit den bekannten Mechanismen allerdings zu einer mangelnden Konvergenz des HMM-Trainings.

Aus WO-A-99/45530 ist ein Verfahren zur Sprachverarbeitung bekannt, bei dem unterschiedliche Zeitraster verwendet werden.

Die **Aufgabe** der Erfindung besteht darin, eine Merkmalsbeschreibung eines Sprachsignals zu erhalten, das bei einer hohe Abtastungrate noch aussagekräftige Merkmale liefert.

Diese Aufgabe wird gemäß den Merkmalen der unabhängigen Patentansprüche gelöst. Weiterbildungen'der Erfindung ergeben sich auch aus den abhängigen Ansprüchen.

Zur Lösung der Aufgabe wird ein Verfahren zur Ermittlung einer Merkmalsbeschreibung eines Sprachsignals angegeben, bei dem mit einem ersten Zeitraster ein erstes Sprachmodell trainiert wird. Mit einem zweiten Zeitraster wird ein zweites Sprachmodell trainiert, wobei das Training des zweiten Sprachmodells mit dem ersten Sprachmodell initialisiert wird.

Eine Weiterbildung besteht darin, daß das zweite Zeitraster kleiner als das erste Zeitraster ist.

Ein Vorteil besteht darin, daß durch die Initialisierung mit den aus dem ersten Sprachmodell erlangten Kenntnissen das zweite Sprachmodell auch für ein sehr kleines zweites Zeitraster konvergiert und damit eine entsprechend hochauflösende Information des Sprachsignals verfügbar ist.

Gerade bei der Sprachsynthese ist diese Information nützlich, da der schwierig zu synthetisierende Übergang zwischen den Lauten durch die höhere (zeitliche) Auflösung genauer modelliert wird.

Allgemein wird unter Zeitraster hierbei verstanden die Wiederholungsrate mit der eine Abtastung des Sprachsignals erfolgt bzw. mit der das (eingangs mit 25ms Breite genannte) Zeitfenster versetzt wird.

Eine andere Weiterbildung besteht darin, daß das zweite Sprachmodell mit Segmentgrenzen des ersten Sprachmodells initialisiert wird. Im Rahmen des Trainings des ersten Sprachmodells, das bevorzugt ein Hidden-Markov-Modell (HMM) ist, werden z.B. für den Laut /a/ eine Vielzahl möglicher Repräsentanten gefunden. Diese Repräsentanten geben eine erste grobe Segmentierung vor für den Laut /a/ vor. Diese Laute dienen für das zweite Sprachmodell als Grundlage, wobei durch das zweite Zeitraster eine höhere zeitliche Auflösung eine genauere Unterscheidung der mittels ersten Sprachmodells gefundenen Repräsentanten für den Laut /a/ ermöglicht. Das erneute Training konvergiert somit und gewährleistet darüberhinaus eine deutlich verbesserte Unterscheidbarkeit bzw. Beschreibbarkeit der Laute gegenüber dem ersten Sprachmodell.

Eine Weiterbildung besteht darin, daß Sprachmodell ein HMM ist, wobei insbesondere die Segmentgrenzen für die Initialisierung des zweiten Sprachmodells ein Resultat des HMM-Trainings darstellen.

Eine Ausgestaltung besteht darin, daß die Merkmalsbeschreibung ein Merkmalsvektor ist.

Eine weiter Ausgestaltung besteht darin, daß das erste Zeitraster in einem Bereich zwischen 4ms und 10ms liegt.

Entsprechend kann das zweite Zeitraster größer als Null und 6ms liegen.

Eine zusätzliche Weiterbildung besteht darin, daß das beschriebene Verfahren in der Sprachverarbeitung, insbesondere in der Sprachsynthese eingesetzt wird.

Im Rahmen der Sprachsynthese ist es eine wesentliche Aufgabe, geeignete Lautgrenzen aus einem zumeist umfassenden Trainingsmaterial (gesprochener Text) zu ermitteln ("auszuschneiden"). Dabei können unterschiedliche Laute berücksichtigt werden: Phoneme, Diphone, Triphone, Halbsilben, Silben, Wörter, Wortkombinationen, usf. Insbesondere können die einzelnen Laute im Hinblick auf ihren Kontext ausgeschnitten werden. Unterscheidbar sind hierbei ein Links- von einem Rechtskontext die jeweils für sich oder in Kombination in unterschiedlicher Länge mit dem Laut kombiniert werden können. Hierzu ein Beispiel (Wortkontext): Betrachtet wird das Wort "Ermittlung" in
"Verfahren zur Ermittlung einer Merkmalsbeschreibung eines Sprachsignals".
Der Rechtskontext mit der Länge 1 umfaßt das Wort "einer", entsprechend gilt für den Linkskontext (Länge=1) das Wort "zur". Entsprechend können weitere Kontexte unterschiedlicher Länge berücksichtigt werden.

Entsprechend der Länge der Lauteinheiten und der jeweils zu berücksichtigenden Kontexte ist es bei der Segmentierung bedeutend, gerade die Grenzen zwischen den Lauten ermitteln zu können.

Auch wird zur Lösung der Aufgabe eine Anordnung zur Ermittlung einer Merkmalsbeschreibung eines Sprachsignals angegeben, die eine Prozessoreinheit auweist, die derart eingerichtet ist, daß
a) mit einem ersten Zeitraster ein erstes Sprachmodell trainierbar ist;
b) mit einem zweiten Zeitraster ein zweites Sprachmodell trainierbar ist, wobei das zweite Sprachmodell mit dem ersten Sprachmodell initialisiert wird.

Diese Anordnung ist insbesondere geeignet zur Durchführung des erfindungsgemäßen Verfahrens oder einer seiner vorstehend erläuterten Weiterbildungen.

Ausführungsbeispiele der Erfindung werden nachfolgend anhand der Zeichnung dargestellt und erläutert.

Es zeigen
- Fig.1: eine Skizze zur Sprachmodellierung mittels HMM;
- Fig.2: ein Blockdiagramm mit einem Verfahren zur Ermittlung einer Merkmalsbeschreibung eines Sprachsignals;
- Fig.3: ein Sprachsignal über der Zeit zur Veranschaulichung einer Merkmalsextraktion bzw. Segmentierung;
- Fig.4: eine Prozessoreinheit.

In **Fig.2** ist ein Blockdiagramm gezeigt, das die Funktionsweise eines Verfahrens zur Ermittlung einer Merkmalsbeschreibung eines Sprachsignals veranschaulicht. In einem Schritt 201 wird ein erstes Sprachmodell für ein vorgegebenes erstes Zeitraster t1 trainiert. Dabei wird ein Trainingsmaterial natürlichgesprochenen Textes zum Training der Hidden-Markov-Modelle eingesetzt, wobei zu jedem Abtastzeitpunkt (insbesondere sei t1=6ms) ein Merkmalsvektor aus dem Sprachsignal bestimmt und zum Training der HMMs eingesetzt wird. Nach abgeschlossenem HMM-Training liegt ein erstes Sprachmodell 202 vor. Anhand dieses Sprachmodells 202 sind Laute identifizierbar, deren Segmentgrenzen (also deren in dem ersten Sprachmodell ermittelten Abschnitte im Sprachsignal) als Initialisierung für ein zweites HMM-Training dienen. Diesem zweiten Sprachmodell wird ein zweites Zeitraster t2 zugrundegelegt, wobei gilt t2<tl (insbesondere sei t2=2ms). Durch die Initialisierung des zweiten HMM-Trainings mit den identifizierten Abschnitten aus dem ersten Training konvergiert auch das zweite Sprachmodell 204, es ergibt sich demnach ein Sprachmodell 204 mit einer deutlich höheren zeitlichen Auflösung, bei dem sichergestellt ist, daß trotz der hohen Auflösung ein sinnvolles Training erfolgt ist.

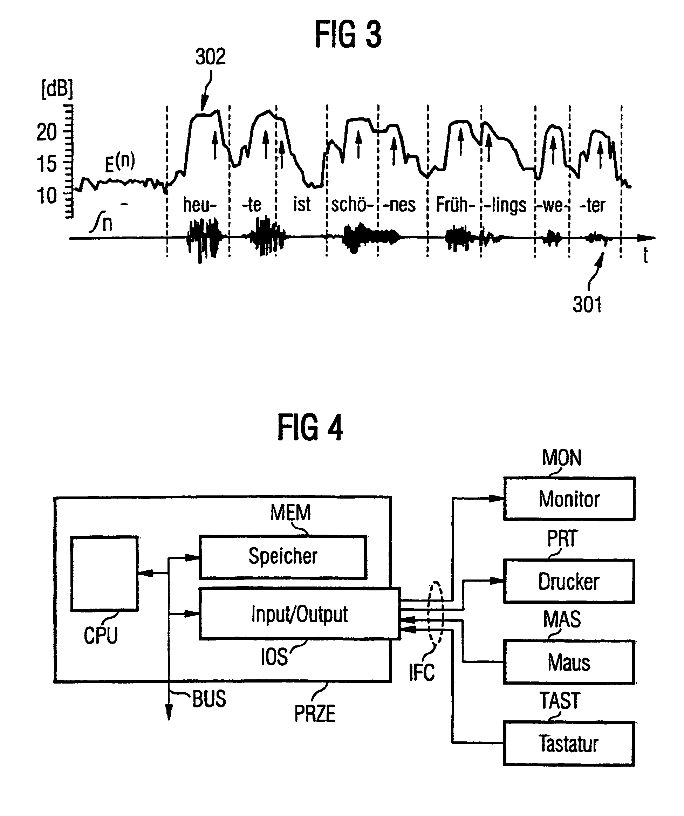

In **Fig.3** ist ein Sprachsignal 301 über der Zeit t aufgetragen. Das Sprachsignal stellt den Satz "Heute ist schönes Frühlingswetter" dar. An dem Verlauf des Sprachsignals ist zu erkennen, daß die Segmentierung der Lautgrenzen nichttrivial ist. Durch die beschriebene Informationsextraktion aus kurzen - den Lautübergang kennzeichnenden - Abschnitten ist insbesondere eine automatisierte Extraktion ermöglicht. In Fig.3 ist zudem ein Energieverlauf 302 zu erkennen, aus dem Information entnehmbar ist, die in den Merkmalsvektor (siehe Fig.2) aufgenommen wird.

In **Fig.4** ist eine Prozessoreinheit PRZE dargestellt. Die Prozessoreinheit PRZE umfaßt einen Prozessor CPU, einen Speicher SPE und eine Input/Output-Schnittstelle IOS, die über ein Interface IFC auf unterschiedliche Art und Weise genutzt wird: Über eine Grafikschnittstelle wird eine Ausgabe auf einem Monitor MON sichtbar und/oder auf einem Drucker PRT ausgegeben. Eine Eingabe erfolgt über eine Maus MAS oder eine Tastatur TAST. Auch verfügt die Prozessoreinheit PRZE über einen Datenbus BUS, der die Verbindung von einem Speicher MEM, dem Prozessor CPU und der Input/Output-Schnittstelle IOS gewährleistet. Weiterhin sind an den Datenbus BUS zusätzliche Komponenten anschließbar, z.B. zusätzlicher Speicher, Datenspeicher (Festplatte) oder Scanner.

### Literaturverzeichnis:

- [1]: E.G.Schukat-Talamazzini: Automatische Spracherkennung - Grundlagen, statistische Modelle und effiziente Algorithmen, Vieweg & Sohn Verlagsgesellschaft mbH, Braunschweig/Wiesbaden 1995, Seiten 45-74.
- [2]: E.G.Schukat-Talamazzini: Automatische Spracherkennung - Grundlagen, statistische Modelle und effiziente Algorithmen, Vieweg & Sohn Verlagsgesellschaft mbH, Braunschweig/Wiesbaden 1995, Seiten 125-139.

## Patentansprüche

1. Verfahren zur Ermittlung einer Merkmalsbeschreibung eines Sprachsignals mit Zeitrastern in Form von Fortschaltzeiten für gefensterte Ausschnitte des Sprachsignals,
a) bei dem mit einem ersten Zeitraster ein erstes Sprachmodell trainiert wird;
b) bei dem mit einem zweiten Zeitraster ein zweites Sprachmodell trainiert wird, wobei das Training des zweiten Sprachmodells mit dem ersten Sprachmodell initialisiert wird.

2. Verfahren nach Anspruch 1,
bei dem das zweite Zeitraster kleiner als das erste Zeitraster ist.

3. Verfahren nach einem der vorhergehenden Ansprüche,
bei dem das zweite Sprachmodell mit Segmentgrenzen des ersten Sprachmodells initialisiert wird.

4. Verfahren nach einem der vorhergehenden Ansprüche,
bei dem das Sprachmodell ein Hidden-Markov-Modell ist.

5. Verfahren nach Anspruch 4,
bei dem die Segmentgrenzen bestimmt werden, indem das Hidden-Markov-Modell trainiert wird.

6. Verfahren nach einem der vorhergehenden Ansprüche,
bei dem die Merkmalsbeschreibung ein Merkmalsvektor ist.

7. Verfahren nach einem der vorhergehenden Ansprüche,
bei dem das erste Zeitraster in einem Bereich zwischen 4ms und 10 ms liegt.

8. Verfahren nach einem der vorhergehenden Ansprüche,
bei dem das zweite Zeitraster in einem Bereich größer als Null und 6ms liegt.

9. Verfahren nach einem der vorhergehenden Ansprüche zum Einsatz in einem System zur Sprachverarbeitung.

10. Verfahren nach einem der vorhergehenden Ansprüche zum Einsatz in einem System zur Sprachsynthese.

11. Anordnung zur Ermittlung einer Merkmalsbeschreibung eines Sprachsignals,
mit einer Prozessoreinheit, die derart eingerichtet ist, daß
a) mit einem ersten Zeitraster ein erstes Sprachmodell trainierbar ist;
b) mit einem zweiten Zeitraster ein zweites Sprachmodell trainierbar ist, wobei das Training des zweiten Sprachmodells mit dem ersten Sprachmodell initialisiert wird.

## Claims

1. Method for determining a feature description of a speech signal with time rasters in the form of stepping times for windowed segments of the speech signal,
a) in which a first speech model is trained with a first time raster;
b) in which a second speech model is trained with a second time raster, the training of the second speech model being initialized with the first speech model.

2. Method according to Claim 1, in which the second time raster is smaller than the first time raster.

3. Method according to one of the preceding claims, in which the second speech model is initialized with segment boundaries of the first speech model.

4. Method according to one of the preceding claims, in which the speech model is a hidden Markov model.

5. Method according to Claim 4, in which the segment boundaries are determined by training the hidden Markov model.

6. Method according to one of the preceding claims, in which the feature description is a feature vector.

7. Method according to one of the preceding claims, in which the first time raster is situated in a range between 4 ms and 10 ms.

8. Method according to one of the preceding claims, in which the second time raster is situated in a range greater than zero and 6 ms.

9. Method according to one of the preceding claims for use in a system for speech processing.

10. Method according to one of the preceding claims for use in a system for speech synthesis.

11. Arrangement for determining a feature description of a speech signal, having a processor unit which is set up in such a way that
a) a first speech model can be trained with a first time raster;
b) a second speech model can be trained with a second time raster, the training of the second speech model being initialized with the first speech model.

## Revendications

1. Procédé pour la détermination d'une description caractéristique d'un signal vocal, comprenant des tranches de temps sous forme de temps de réenclenchement pour des sections en fenêtre du signal vocal,
a) dans lequel un premier modèle vocal est appris au moyen d'une première tranche de temps ;
b) dans lequel un deuxième modèle vocal est appris au moyen d'une deuxième tranche de temps, l'apprentissage du deuxième modèle vocal étant initialisé avec le premier modèle vocal.

2. Procédé selon la revendication 1,
dans lequel la deuxième tranche de temps est inférieure à la première tranche de temps.

3. Procédé selon l'une quelconque des revendications précédentes,
dans lequel le deuxième modèle vocal est initialisé avec des limites de segment du premier modèle vocal.

4. Procédé selon l'une quelconque des revendications précédentes,
dans lequel le modèle vocal est une modélisation par chaîne de Markov cachée.

5. Procédé selon la revendication 4,
dans lequel les limites de segment sont déterminées en apprenant la modélisation par chaîne de Markov cachée.

6. Procédé selon l'une quelconque des revendications précédentes,
dans lequel la description caractéristique est un vecteur caractéristique.

7. Procédé selon l'une quelconque des revendications précédentes,
dans lequel la première tranche de temps est située dans une plage entre 4 ms et 10ms.

8. Procédé selon l'une quelconque des revendications précédentes,
dans lequel la deuxième tranche de temps est située dans une plage supérieure à zéro et 6 ms.

9. Procédé selon l'une quelconque des revendications précédentes pour utilisation dans un système de traitement de la parole.

10. Procédé selon l'une quelconque des revendications précédentes pour utilisation dans un système de synthèse de la parole.

11. Dispositif pour la détermination d'une description caractéristique d'un signal vocal,
comprenant une unité de processeur qui est équipée de telle manière que
a) un premier modèle vocal peut être appris au moyen d'une première tranche de temps ;
b) un deuxième modèle vocal peut être appris au moyen d'une deuxième tranche de temps, l'apprentissage du deuxième modèle vocal étant initialisé avec le premier modèle vocal.
